# EUROPEAN PATENT APPLICATION

(11) **EP 4 191 541 A1**
(43) Date of publication of application: **07.06.2023**
(21) Application number: 20946721.6
(22) Date of filing: 27.07.2020
(51) Int. Cl.: G06T 19/00, G06T 13/40

(54) **INFORMATION PROCESSING DEVICE AND INFORMATION PROCESSING METHOD**

(71) Applicant: VRC Inc., Hachioji-shi, Tokyo 192-0046 (JP)
(72) Inventor: XIE, Yingdi, Hachioji-shi, Tokyo 192-0046 (JP); ZHANG, Yanpeng, Hachioji-shi, Tokyo 192-0046 (JP)
(74) Representative: Haseltine Lake Kempner LLP
(86) International application number: PCT/JP2020/028732
(87) International publication number: WO 2022/024191

(57) **Abstract**

The information processing device includes an obtaining means configured to obtain 3D modeling data that defines a 3D model of an object, an identifying unit configured to automatically identify an element to be edited among elements constituting the 3D modeling data based on appendix data corresponding to the 3D modeling data, and an editing means configured to automatically edit the identified element.

## Description

### TECHNICAL FIELD

The present disclosure relates to a technique for editing 3D modelling data.

### RELATED ART

Known in the art are systems for processing 3D modelling data of a 3D model of an object. For example, Patent Document 1 discloses a technique for estimating dynamic characteristics represented by 3D modeling data, and for adding to the 3D modelling data, data representing the estimated characteristics.

### PRIOR ART

### PATENT DOCUMENT

Patent Document 1: JP 6489726B

### SUMMARY

### PROBLEM TO BE SOLVED

The technique described in Patent Document 1, requires time and effort to modify already generated 3D modelling data. The present disclosure provides a technique for more easily modifying already generated 3D modeling data.

### SOLUTION

According to one aspect of the disclosure, there is provided an information processing device including: an obtaining means for obtaining 3D modeling data representing a 3D model of an object; a specifying means for automatically specifying an element to be edited among elements constituting 3D modeling data based on appendix data corresponding to 3D modeling data; and an editing means for automatically editing the specified element.

The appendix data may include movement data for movement of the 3D model, the specifying means may specify the movement data as a corrected element representing the object, and the editing means may edit the movement data to impart exaggerated movement to a specified feature.

The exaggerated movement may be movement beyond that possible with a structure of the skeleton and muscles of the object.

The 3D modeling data may include data defining a shape of the object and a texture of the object, the appendix data may include a time stamp indicating a date and time at which an image used for generating the 3D modeling data is captured, and in a case that a difference between the time stamp and a current date and time satisfies a predetermined condition, the specifying means may specify data defining the shape and a texture of the object as the corrected element.

The editing means may perform editing to age the 3D model based on a difference between the time stamp and a current date and time.

The appendix data may include lifestyle information on lifestyles of the object, the information processing device may further includes a simulation means for simulating a change in a shape of the object based on the lifestyle information, wherein the specifying means may specify the element to be edited based on a result of the simulation.

The information processing device may further include a storage means for storing 3D modeling data generated from data obtained by scanning the object at a plurality of different times, wherein the simulation means may perform the simulation using the plurality of 3D modeling data.

The editing means may edit 3D modeling data of the object by combining features extracted from a plurality of other objects.

According to another aspect of the disclosure, there is provided an information processing method including: obtaining 3D modeling data representing a 3D model of an object, 3D modeling data including appendix data of the object; automatically identifying, based on the appendix data, an element to be modified among elements constituting the 3D modeling data; and automatically modifying the identified element.

### ADVANTAGOUS EFFECTS

According to the present disclosure, already generated 3D modeling data can be more easily edited.

### BRIEF DESCRIPTION OF THE DRAWINGS

FIG. 1 shows an exemplary configuration of a 3D data system 1 according to an embodiment.
FIG, 2 shows an exemplary functional configuration of 3D data system 1.
FIG. 3 shows an exemplary hardware configuration of server 10.
FIG. 4 shows an exemplary flowchart illustrating an operation of server 10.
FIG. 5 is a diagram illustrating a configuration of 3D modelling data in database 111.

### DESCRIPTION OF REFERENCE NUMERALS

1...3D data system, 3D...user ID, 9...3D data set, 10...server, 11...storage means, 12...acquisition means, 13...specifying means, 14...editing means, 15...control means, 20...server, 30...terminal device, 31...application, 40...3D scanner, 91...user ID, 92...3D modeling data, 93...appendix data, 101... CPU, 102...memory, 103...storage, 104...communication IF, 111...database, 921...3D modeling data, 922...3D modeling data, 923...3D modeling data.

### DETAILED DESCRIPTION

### 1. Configuration

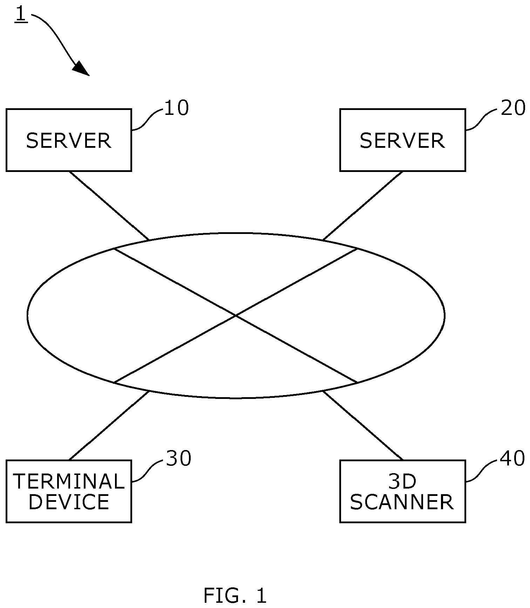

FIG. 1 is a diagram illustrating a configuration of a 3D data system 1 according to an embodiment. 3D data system 1 provides 3D modelling data. Here, "3D modelling data" means data representing a 3D model of an object such as a human, an animal, or an article. A 3D model is a model that represents an appearance of an object in three dimensions. For example, an image generated from a photograph of an object may be superimposed on to an outer surface of a 3D model. The 3D model is used, for example, as an avatar either of a user or of a person different from the user in a virtual space. 3D models are used in a variety of applications, such as, for example, video games, video calls, video conferencing, shopping, and fitness.

3D data system 1 includes server 10, server 20, terminal device 30, and 3D scanner 40. Server 10 is a server that manages 3D modeling data. Server 10 is managed by the administrator of 3D data system 1. Server 20 is a server that provides an application that uses 3D modeling. The application may be provided either by a business entity that is the administrator of 3D data system 1, or by another business entity. Terminal device 30 is a user terminal that utilizes an application (i.e., utilizes 3D modeling). Terminal device 30 is an information processing device such as a smart phone, a tablet terminal, or a personal computer. For simplicity of explanation, only one server 20, one terminal device 30, and one 3D scanner 40 are referred to here. However, 3D data system 1 may include a plurality of servers 20 and/or a plurality of terminal devices 30.

3D scanner 40 is a device that scans an object to generate 3D modelling data. 3D scanner 40 captures an image (i.e., a photograph) of an appearance of the object, and measures a distance from a reference position (e.g., a position of a sensor) to a surface of the object to obtain both image data and range data. Further, 3D scanner 40 processes the image data and range data using predetermined algorithms to generate 3D modelling data of the object. 3D scanner 40 uploads the generated 3D modeling data to server 10.

Server 20 provides an application program to terminal device 30. The application program includes a software module for sending an API (Application Programming Interface) request to server 10. For example, when terminal device 30 executes the application program, terminal device 30 transmits an API request to server 10 in accordance with the program. The API request requires sending of data (e.g., 3D modeling data) for outputting a 3D model. Server 10 transmits an API response to the API request. The API response contains the requested 3D data. The data for outputting the 3D model may be 3D modeling data, or may be data indicating a result of processing the 3D modeling data (e.g., movement image data obtained by moving the 3D model). Terminal device 30 provides the user with an application for using the 3D data.

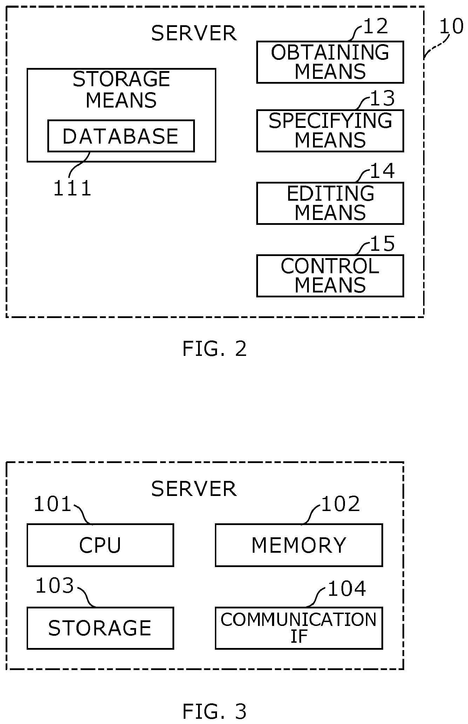

FIG. 2 is a diagram illustrating a functional configuration of 3D data system 1. 3D data system 1 includes storage means 11, obtaining means 12, specifying means 13, editing means 14, and control means 15. Storage means 11 stores various data. In this example, database 111 is stored in storage means 11. Database 111 stores 3D modelling data representing a 3D model of an object and stores corresponding attribute data. Specifying means 13 automatically specifies an element to be edited among elements constituting the 3D modeling data based on appendix data corresponding to the 3D modeling data. Here, "automatically identifying the element to be edited" means finally determining the element to be edited without explicit instruction from the user. Editing means 14 automatically edits the elements identified by specifying means 13. Here, "automatically editing" means performing editing processing without explicit instruction from the user.

FIG. 3 shows an exemplary hardware configuration of server 10. Server 10 is a computer or information processing device having CPU (Central Processing Unit) 101, memory 102, storage 103, and communication IF104. CPU 101 is a processor that performs various operations in accordance with a program. Memory 102 is a main storage device that functions as a work area when CPU 101 executes a process. Memory 102 includes, for example, RAM (Random Access Memory) and ROM (Read Only Memory). Storage 103 is a device for storing various data and programs. Storage 103 includes, for example, an SSD (Solid State Drive) and/or an HDD (Hard Disc Drive). Communication IF104 is a device that communicates with other devices in accordance with a predetermined communication standard (e.g., Ethernet), and includes, for example, an NIC (Network Interface Card).

In this example, the program stored in storage 103 includes a program (hereinafter, referred to as "management server program") that causes the computer device to function as server 10 in 3D data system 1. While CPU 101 is executing the management server program, at least one of memory 102 and storage 103 acts as storage means 11. CPU101 is an example of obtaining means 12, specifying means 13, editing means 14, and control means 15.

### 2. Operation

### 2-1. Overview

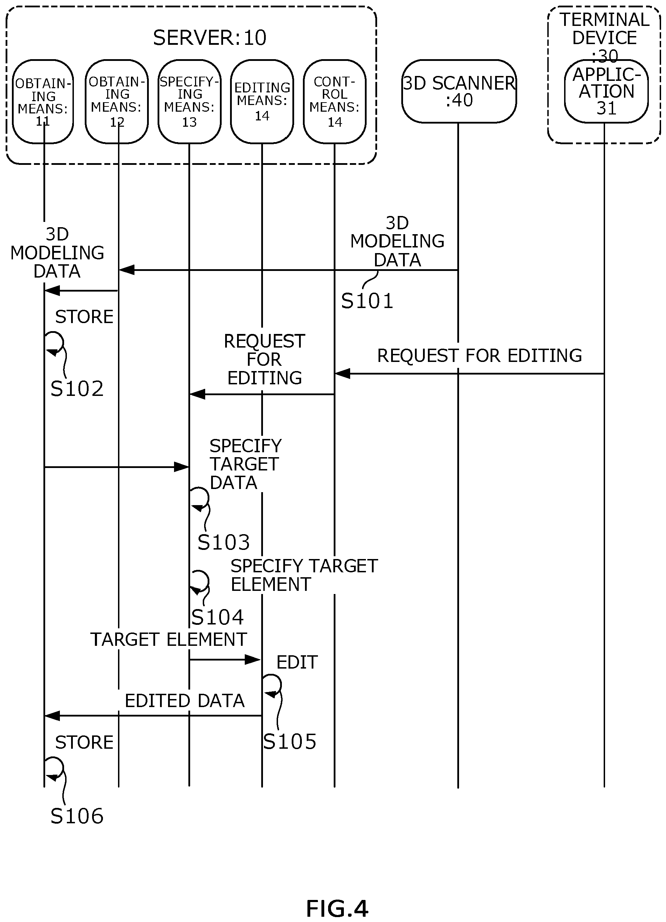

FIG. 4 is a flowchart illustrating an operation of server 10. At step S101, obtaining means 12 obtains 3D modeling data of the object. In this instance, server 10 obtains 3D modelling data from 3D scanner 40. Server 10 obtains the appendix data in addition to the 3D modelling data. The appendix data is input by, for example, a user, when the user is scanned. At step S102, storage means 11 stores in database 111 the 3D modeling data and the appendix data obtained by obtaining means 12.

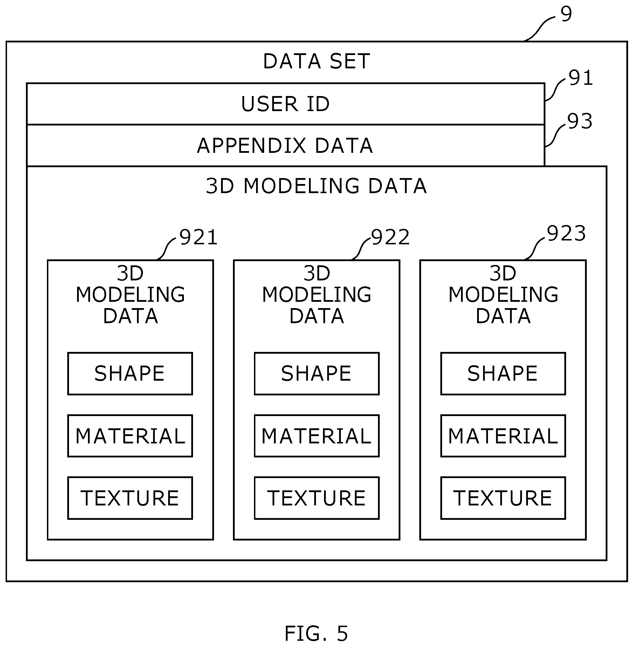

FIG. 5 is a diagram illustrating structures of 3D modelling data in database 111. Database 111 includes a plurality of 3D data sets 9. A 3D data set is a data set that includes at least 3D modelling data. The plurality of 3D data sets 9 include user ID 91, 3D modeling data (or a body 3D modeling data body) 92 and appendix data 93. Appendix data 93 includes, for example, user attributes and update dates. User attributes are attributes such as a user ID, username, date of birth, gender, height, and weight. An update date indicates a date and time of update of a 3D data set.

In this example, 3D modeling data 92 includes a plurality of (three in FIG. 5) data relating to the same object, namely, 3D modeling data 921, 3D modeling data 922, and 3D modeling data 923. 3D modelling data 921 includes data that defines a shape of an object. A shape of an object is defined as a polygon or as a free-form surface. 3D modelling data 921 further includes data relating to properties of a material of the object. The properties of the material of the object include at least one of color, transparency, reflection, refractive index, self-luminescence, bump, and displacement. 3D modelling data 921 further includes data that defines a texture. A texture is applied to the model. Similarly, 3D modeling data 922 and 3D modeling data 923 include data that defines shapes of models, properties of materials and textures. Data that defines shapes, material properties and textures are examples of elements of 3D modelling data 92.

In one example, each of these groups of plural data is of a different quality. In this example, 3D modeling data 921 is of high quality (i.e., consists of a large amount of data), 3D modeling data 922 is of medium quality (i.e., consists of a medium amount of data), and 3D modeling data 923 is of low quality (i.e., consists of a small amount of data). The high quality, medium quality, and low quality 3D modeling data are examples of elements that constitute 3D modeling data 92.

In this embodiment, 3D modelling data 921 is divided into a plurality of regions. That is, each of a shape, material, and texture is divided into a plurality of parts. The plurality of parts are sections based on a body structure of a target, and include, for example, a head, chest, abdomen, hip, arms, hands, legs, and leg. At least a part of the plurality of parts may be further subdivided into a plurality of sub-parts. For example, the head may be divided into hair, eyes, nose, mouth, and ear. Each of the plurality of parts is a further example of the elements constituting 3D modelling data 92.

Appendix data 93 includes bone data. Bone data are elements that are units of movement for moving 3D models. For example, when 3D models are represented by polygons, correspondences (so-called skin weights) between vertices of the polygons and the bones are set (this process is referred to as skinning). As the bones move, the corresponding polygons follow the movement of the bones, and thereby a whole 3D model moves. Bone data may also include sets of different qualities, similarly to the 3D modelling data. The bone data may be included in the 3D modeling data, and is an example of the plurality of elements constituting 3D modeling data 92.

In this example, appendix data 93 includes movement data that defines movement of 3D models. In one example, operation data is defined as a movement of a bone corresponding to each of a specified movement, e.g., walking, running, jumping, stopping, throwing, swimming, and dancing. For example, the movement data for running defines a step length, raising of a leg, swinging of an arm, and so forth. In another example, movement data may define a movement of a particular part of 3D modelling data, e.g., a facial expression. For example, the movement data of the facial expression defines how a mouth opens, how eyebrows move, and so forth.

The movement data may be extracted from, for example, a moving image obtained by taking a video of an object. For example, movement data may be generated using a known motion-capture technique. Alternatively, movement data may be provided as a template in 3D data system 1 and may be associated with 3D modeling data either in accordance with a user's selection or automatically by the system.

3D modelling data is generated by a 3D model generating engine. A 3D model generating engine is an example of a generator for generating a 3D model of an object from image data and range data of the object, and is, for example, a software module. In this example, a 3D modeling engine is implemented in 3D scanner 40. The 3D modeling engine may be implemented in server 10 in addition to or instead of 3D scanner 40, or may be implemented in other devices.

Referring again to FIG. 4, at step S103, specifying means 13 specifies 3D modeling data 92 (hereinafter referred to as "target data") to be edited among the plurality of 3D modeling data 92 recorded in database 111. In one embodiment, specifying means 13 specifies the target user from among the plurality of users, and specifies 3D modeling data 92 of the target user as the target data. The target user is identified, for example, by an explicit instruction from the user or from another user. Alternatively, specifying means 13 may specify 3D modeling data 92 belonging to a particular group among 3D modeling data 92 included in database 111 as the target data at a predetermined timing (for example, periodically). Here, the plurality of 3D modelling data is grouped in advance in accordance with predetermined criteria.

At step S104, specifying means 13 automatically specifies the element to be edited (hereinafter referred to as "target element") from among the plurality of elements constituting the target data. Specifying means 13 specifies the target element based on the appendix data corresponding to the target data. At step S105, editing means 14 automatically edits the target element. The editing method is determined in advance in accordance with, for example, the target element. Control means 15 notifies storage means 11 of the edited 3D modeling data. Storage means 11 writes (at step S106) 3D modeling data including the edited element to database 111. In this way, the automatically edited 3D modelling data is written to database 111.

Examples of step S104 and step S105 are described below. The following processing may be applied in a combination of at least two or more.

### 2-2. Editing that exaggerates movement

In this example, the object element is movement data that defines movement of the 3D model. Movement is exaggerated by editing.

For example, in response to an instruction from the user, specifying means 13 specifies the movement data as a candidate of the target element from among various types of data included in the target data. Further, specifying means 13 specifies (at step S104), as the target element, movement data representing the user from among the candidates of the target element. The movement data representing the user is, for example, movement data having the highest frequency of use among the plurality of movement data. In this case, the use history is recorded for each of movement data in database 111. Alternatively, the movement data representing the user is data having a largest deviation from reference movement data among the plurality of movement data. The movement data in this case is movement data other than a template, such as movement data obtained from motion-capture of an object, movement data estimated from attributes (e.g., age, sex, and physique) of the object, or data edited by a user. In database 111, reference data is determined for each movement. The reference data is, for example, movement data of a template determined by an operator or movement data reflecting a statistical representative value obtained by statistically processing movement data of a plurality of objects.

At step S105, editing means 14 edits the data of the target element to impart an exaggerated movement to the movement indicated by the movement data that is the target element. Here, the exaggerated movement refers to a movement that is not normally possible given the structure of the skeleton and the muscles of the object. In one example, the exaggerated movement includes a comical representation, such as a leg rotating 360° in a vertical direction when running, an arm rotating 360° in a horizontal direction, a stride exceeding a height of the object, an eyeball jumping out of the face (when surprised), steam exiting the head (when angry), etc. The exaggerated movement is predefined as a template for each movement, for example.

According to this example, the user can provide an avatar with comic features.

### 2-3. Age-change editing

In this example, the object element is data that defines a shape of the 3D model and texture. Editing is carried out to reflect aging over time since the object was imaged.

Specifying means 13 specifies the target element based on a comparison between a generation date and time (time stamp) of the image data created when generating the target data and a current date and time. Specifically, if a difference between values of the time stamp and the current date and time exceeds a threshold value, specifying means 13 specifies (at step S104), as target elements, data and textures that reference shapes among various data included in the target data. The generation date and time of the image data is indicated by appendix data 93. The threshold value is determined in advance by, for example, an operator. Alternatively, the threshold may be specified by the user.

At step S105, editing means 14 is used to age the 3D model based on the difference between the time stamp and the current date and time. Specifically, editing means 14 is used to change a shape and texture of the 3D model to advance perceivable times relative to differences in the shape and texture of the 3D model (i.e., simulates aging of the 3D model). For example, in a case that facial 3D modelling is aged, wrinkles increase, cheek flesh decreases, and skin color fades.

In one example, machine-learning techniques are used to simulate aging over time. In this example, editing means 14 includes a machine-learning model. The machine-learning model is a model in which, for each of a plurality of users, data that define a shape of the 3D model and textures at a first time point and at times from the first time point to a second time point are provided to the input layer, data that define the shape of 3D model and textures at the second time point are provided to the output layer as training data, and machine-learning is performed. For example, data recorded in database 111 is used as training data. Editing means 14 provides materials and textures that define shapes, which are the target elements identified at step S104, and the differences between the time stamp and the current date and time to the input layers of the machine-learning model. The machine-learning model outputs shape defining data and textures corresponding to these data. The data defining this shape and the 3D model indicated by the texture data indicate a 3D model expected at the present date and time. Editing means 14 edits 3D modeling data using data on textures that define shapes outputted from the machine-learning model.

According to this example, for example, the user can cause the avatar to appear older in a case that time has passed since the user created the avatar.

### 2-4. Lifestyle simulation

In this case, the element of interest defines the geometry of the 3D model. Editing means 14 edits 3D modeling data to reflect the simulated result when it is assumed that the lifestyle of the object continues. In this example, appendix data 93 includes information on the lifestyle of the user (hereinafter, referred to as "lifestyle information").

Lifestyle refers to a habitual behavior of an object, such as eating, exercising, sleeping, working, drinking alcohol, and smoking. Information on meals includes, for example, information on a number of meals, a time, calories consumed, and nutritional value. Information on exercise includes, for example, information on a number of exercises, time, exercise intensity, and exercise type. Information on sleep includes, for example, sleep time, wake-up time, and sleep depth. Information on work includes, for example, information on a start time and an end time. Information on drinking alcohol includes, for example, a number and amount of times of drinking alcohol. Information on smoking includes, for example, a number and amount of smoking. The lifestyle information is inputted by the user, for example, when generating 3D modeling data or when registering 3D modeling data in database 111. Alternatively, the information collected by the application in the terminal device 30 is uploaded to database 111 as lifestyle information at a predetermined timing (for example, periodically).

If the lifestyle indicated by appendix data 93 satisfies a predetermined condition with respect to a certain user, specifying means 13 specifics the data defining the shape of the 3D model of the user as the target element. More specifically, if the lifestyle satisfies a predetermined condition, specifying means 13 specifies (at step S104) a predetermined element as a target element in association with the condition. For example, a state that an amount of alcohol drinking reaches a warning level (for example, an amount of alcohol drinking per week exceeds a threshold value) is defined, and this condition is associated with a shape around a belly of the 3D model. In this case, if the amount of alcohol drinking per week of the user exceeds the threshold value, specifying means 13 specifies the shape around the abdomen as the target element at step S104. As another example, where a condition is defined that an amount of exercise exceeds a recommended level (e.g., the amount of exercise per day exceeds a threshold), and this condition is associated with the entire body of 3D model. In this case, if the user's daily movement exceeds the threshold value, specifying means 13 specifies at step S104 the whole body shape as the target element. Further, this condition may be subdivided into specific exercise items, such as jogging, bench-press, squat, etc.

At step S105, editing means 14 simulates a change in 3D modeling based on the user's lifestyle. Specifically, editing means 14 simulates what kind of change occurs in the body shape assuming that the user continues the lifestyle for a certain period of time. For example, if alcohol drinking at a warning level or higher is continued in January, the abdominal circumference becomes wider.

In one example, machine-learning techniques are used to simulate body shape changes in response to lifestyle. In this example, editing means 14 includes a machine-learning model (editing means 14 is an example of a simulation means). This machine-learning model is a learned model in which, for each of a plurality of users, data that defines the shape of the 3D model at the first time point, and lifestyle from the first time point to the second time point are provided to the input layer, and data that defines the shape of the 3D model at the second time point are provided to the output layer as training data to perform machine-learning. For example, data recorded in database 111 is used as training data. Editing means 14 provides, to the input layer of the machine-learning model, the data defining shapes, which are the target elements identified in the step S104, the lifestyles of the user and the duration of the lifestyles. The period during which the lifestyle is continued is determined in advance, for example, by editing means 14. The machine-learning model outputs data defining shapes corresponding to these data. 3D modelling, indicated by the materials defining the shapes, indicates the body type that would be expected if this lifestyle were to be continued for a certain period of time. Editing means 14 edits 3D modeling data using the data that defines the shapes output from the machine- learning model.

According to this example, for example, assuming that a certain lifestyle is continued for a certain period of time, it is possible to simulate what kind of influence the lifestyle has on the body shape of the user.

### 2-5. Forecasts based on historical changes

In this instance, the object elements are the materials and texture defining the shape of the 3D model. They are modified to reflect simulated results based on historical experience of change. In this instance, appendix data 93 includes 3D modelling data generated from data (i.e., data defining images of the object) obtained by scanning the object at a plurality of historically distinct times or timings (e.g., monthly). For example, the user scans the object (e.g., himself/herself) with 3D scanner 40 once a month. 3D scanner 40 generates and uploads 3D modelling data to database 111. If new 3D modeling data is added, storage means 11 records the previous 3D modeling data as appendix data 93.

If the previous 3D modeling data included in appendix data 93 satisfies a predetermined condition for a certain user, specifying means 13 specifics (at step S104) data and texture defining the shapes of the 3D models of the user as target elements. At step S105, editing means 14 simulates a change in a 3D model in the future based on the user's historical 3D model.

In one example, machine-learning techniques are used to simulate future changes based on past change performance. In this example, editing means 14 includes a machine-learning model. The machine-learning model is a learned model in which, for each of a plurality of users, 3D modeling data and a time stamp at a plurality of previous time points in the series of time-series data are provided to an input layer, and 3D modeling data and a time stamp at a plurality of new time points in the time-series data are provided to an output layer as training data to perform machine-learning. For example, data recorded in database 111 is used as training data. Editing means 14 provides, to the input layer of the machine-learning model, the historical 3D modeling data and the time stamp thereof, which are the target elements identified at step S104, and the expected date and time (one month later or one year later). The machine-learning model outputs 3D modelling data corresponding to the data. The 3D model shows a 3D model expected from trends of historical changes. Editing means 14 edits 3D modeling data using 3D modeling data output from the machine-learning model.

According to this example, it is possible to simulate what kind of change occurs in the appearance of the next month, for example, based on the change in appearance during the last year.

### 2-6. Capturing movement of others

In this example, the target element is movement data and is modified to capture movement of others. In this example, the attribute data includes information identifying another person (e.g., information of a favorite actor or a favorite athlete).

If information specifying another person included in appendix data 93 satisfies a predetermined condition with respect to a certain user, specifying means 13 specifies (at step S104) the movement data of the user as the target element. The predetermined condition is, for example, a condition where information specifying another person matches a person designated by the application 31. In these actors or athletes, characteristic movements for provision to others are defined. For example, an actor X is defined as laughter, a soccer player Y is defined as a kick form, and a baseball player Z is defined as a pitch form. If the appendix data of a user indicates that the user likes the actor X, specifying means 13 specifies, as a target element, movement data for laughing out of the movement data of the user. In addition, specifying means 13 specifies the movement data of the other person specified by appendix data 93 as the data used for the editing.

At step S105, editing means 14 captures the movement data of the other person specified by appendix data 93 as movement data of the user. At this time, editing means 14 may adopt the movement data of the other person as it is (i.e., 100%), as the movement data of the user, or may synthesize the movement data of the other person and the movement data of the user by use of morphing.

In addition, specifying means 13 may modify the movement data of the user by using the movement data of the plurality of others. For example, an example in which appendix data 93 indicates that the user likes the actor A and the actor B (both of which are defined as movements for providing the movement data for laughing to others). In this case, specifying means 13 specifies the movement data for the actor A to smile and the movement data for the actor B to smile as the data used for editing. Editing means 14 synthesizes the movement data of the actor A and the actor B by use of morphing, and edits the movement data of the user by using the movement data.

According to this example, for example, the user can cause his/her avatar to imitate the movement or expression of another person.

### 3. Modification

The present invention is not limited to the embodiments described above, and various modifications can be envisaged. Example variations will be described below. Two or more variations described in the following modification may be combined.

Although editing means 14 edits 3D modeling data in the embodiment, editing means 14 may request 3D model generation engine to correct the modeling data and obtain the modified 3D modeling data from 3D model generation engine. As used herein, "editing" includes instructing the software module to edit 3D modelling data and receive the edited data.

After presenting the automatically edited 3D modeling data to the application 31 (i.e., the user), editing means 14 may receive an indication of further modification of the edited 3D modeling data. For example, in a case where a future change is simulated, editing means 14 may change a time point at which the change is predicted and a time point in accordance with an instruction from the user. In another example, if the movement data of another person and the movement data of the user are morphed, the morphing ratio may be changed in accordance with an instruction from the user.

Methods for simulating changes in 3D modelling data are not limited to using machine learning. In addition to or instead of machine-learning, a heuristic approach may be used.

In the embodiment, an example in which an API request is transmitted from terminal device 30 or the user terminal (that is, an example of a so-called BtoC service) has been described, but the information processing device that transmits an API request to server 10 is not limited to terminal device 30. A server operated by another operator, such as server 20, may send an API request to request transmission of data to output a 3D model of the user of terminal device 30 to server 10. That is, the present invention may be applied to a BtoB service.

The hardware configurations of server 10, server 20, and terminal device 30 are not limited to those illustrated in the embodiment. For example, server 10 may be a physical server or a cloud server.

In the embodiment, at least a part of the functions described as being included in server 10 may be implemented in another device such as the terminal device 30. Server 10 may be a physical server or a virtual server.

The program executed by CPU 101 or the like may be provided in a downloadable state from the server via the Internet, or may be provided in a state stored in a recording medium such as a CD-ROM.

## Claims

1. An information processing device comprising:
an obtaining means for obtaining 3D modeling data representing a 3D model of an obj ect;
a specifying means for automatically specifying an element to be edited among elements constituting 3D modeling data based on appendix data corresponding to 3D modeling data; and
an editing means for automatically editing the specified element.

2. The information processing device according to claim 1, wherein
the appendix data includes movement data for movement of the 3D model,
the specifying means specifies the movement data as a corrected element representing the object, and
the editing means edits the movement data to impart exaggerated movement to a specified feature.

3. The information processing device according to claim 2, wherein
the exaggerated movement is movement beyond that possible with a structure of the skeleton and muscles of the object.

4. The information processing device according to claim 1, wherein
the 3D modeling data includes data defining a shape of the object and a texture of the obj ect,
the appendix data includes a time stamp indicating a date and time at which an image used for generating the 3D modeling data is captured, and
in a case that a difference between the time stamp and a current date and time satisfies a predetermined condition, the specifying means specifies data defining the shape and a texture of the object as the corrected element.

5. The information processing device according to claim 4, wherein
the editing means performs editing to age the 3D model based on a difference between the time stamp and a current date and time.

6. The information processing device according to any one of claims 1 to 5, wherein
the appendix data includes lifestyle information on lifestyles of the object, the information processing device further comprising a simulation means for simulating a change in a shape of the object based on the lifestyle information, wherein
the specifying means specifies the element to be edited based on a result of the simulation.

7. The information processing device according to claim 6, further comprising
a storage means for storing 3D modeling data generated from data obtained by scanning the object at a plurality of different times, wherein
the simulation means performs the simulation using the plurality of 3D modeling data.

8. The information processing device according to any one of claims 1 to 7, wherein
the editing means edits 3D modeling data of the object by combining features extracted from a plurality of other objects.

9. An information processing method comprising:
obtaining 3D modeling data representing a 3D model of an object, 3D modeling data including appendix data of the object;
automatically identifying, based on the appendix data, an element to be modified among elements constituting the 3D modeling data; and
automatically modifying the identified element.
